# EUROPÄISCHE PATENTSCHRIFT

(11) **EP 1 622 781 B1**
(45) Veröffentlichungstag und Bekanntmachung des Hinweises auf die Patenterteilung: **20.12.2006**
(21) Anmeldenummer: 04723569.2
(22) Anmeldetag: 26.03.2004
(51) Int. Cl.: B60G 3/14, B60G 7/00

(54) **LENKER MIT ELASTISCHER RADTR GERLAGERUNG**
STRUT WITH AN ELASTIC WHEEL CARRIER MOUNT
BRAS A LOGEMENT DE SUPPORT DE ROUE ELASTIQUE

(30) Priorität: 15.05.2003 DE 10321878
(43) Veröffentlichungstag der Anmeldung: 08.02.2006
(73) Patentinhaber: DaimlerChrysler AG, 70567 Stuttgart (DE)
(72) Erfinder: Mosler, Christian, Stuttgart (DE)
(86) Internationale Anmeldenummer: PCT/EP2004/003213
(87) Internationale Veröffentlichungsnummer: WO 2004/101298

(56) Entgegenhaltungen:
- WO-A-97/31794
- FR-A- 2 726 227
- US-A- 5 685 556
- PATENT ABSTRACTS OF JAPAN Bd. 0130, Nr. 67 (M-798), 15. Februar 1989 (1989-02-15) & JP 63 270209 A (MAZDA MOTOR CORP), 8. November 1988 (1988-11-08)
- PATENT ABSTRACTS OF JAPAN Bd. 2000, Nr. 04, 31. August 2000 (2000-08-31) & JP 2000 025438 A (NISSAN MOTOR CO LTD), 25. Januar 2000 (2000-01-25)
- PATENT ABSTRACTS OF JAPAN Bd. 2002, Nr. 05, 3. Mai 2002 (2002-05-03) & JP 2002 012015 A (NISSAN MOTOR CO LTD), 15. Januar 2002 (2002-01-15)
- PATENT ABSTRACTS OF JAPAN Bd. 0185, Nr. 26 (M-1683), 5. Oktober 1994 (1994-10-05) & JP 6 183233 A (MAZDA MOTOR CORP), 5. Juli 1994 (1994-07-05)
- PATENT ABSTRACTS OF JAPAN Bd. 0170, Nr. 92 (M-1371), 23. Februar 1993 (1993-02-23) & JP 4 287708 A (DAIHATSU MOTOR CO LTD), 13. Oktober 1992 (1992-10-13)

## Beschreibung

Die Erfindung betrifft eine Einzelradaufhängung in Schräg-, Längs- oder Verbundlenkerbauweise mit einem radführenden am Fahrzeugaufbau gelagerten Schräg-, Längs- oder Verbundlenker, der einen in mehreren elastischen Schwenklagern gelagerten Radträger aufweist.

Aus der DE 198 32 384 C1 ist eine derartige Einzelradaufhängung bekannt. Sie weist einen annähernd um eine vertikale Achse schwenkbaren Radträger auf, wobei die Schwenkachse des Radträgers in Bezug auf die Fahrtrichtung hinter der Radachse liegt, während der Radträger vor der Radachse in Fahrzeugquerrichtung elastisch am Schräg-, Längs- oder Verbundlenker abgestützt ist. Da die Schwenklagerung durch ein formsteifes Viergelenk realisiert ist, neigt die Einzelradaufhängung besonders bei aktiven Bremsregelsystemen zu den Fahrkomfort beeinträchtigenden Längsschwingungen.

Der vorliegenden Erfindung liegt daher die Problemstellung zugrunde, eine Einzelradaufhängung mit einem separat elastisch gelagertem Radträger zu entwickeln, die bei Seiten-, Längs-und Vertikalkräften einen hohen Fahrkomfort ermöglicht.

Diese Problemstellung wird mit den Merkmalen des Hauptanspruches gelöst. Dazu ist der Radträger gegenüber dem Lenker mittels elastischer Schwenklager gelagert. Letztere bestehen zumindest bereichsweise aus zwei konzentrischen Ringen oder einem Ring und einem Bolzen, zwischen denen wenigstens bereichsweise ein Elastomerkörper unlösbar integriert ist. Der äußere Ring, der wie der innere Ring nicht zwingend rund oder zylindrisch sein muss, kann hierbei auch ein Lagerauge sein. Der Radträger verfügt - in Fahrtrichtung gesehen vor der Raddrehachse - über mindestens ein elastisches Steuerlager, dessen Lagerzapfen mit seiner Mittellinie in einer Vertikalebene liegt, die mit der Fahrtrichtung einen Winkel von 20° bis 50° einschließt. Er ist - in Fahrtrichtung gesehen hinter der Raddrehachse - und oberhalb der horizontalen Radmittenquerebene über mindestens einen in Schwenklagern angelenkten Pendelstützlenker am Lenker beweglich gelagert, wobei die Mittellinien der Schwenklager wenigstens in der Konstruktionslage in einer zumindest annähernd vertikalen Ebene liegen. Der Radträger ist - in Fahrtrichtung gesehen hinter der Raddrehachse - und unterhalb der horizontalen Radmittenquerebene über ein als Schwenklager ausgeführtes Stützlager am Lenker beweglich gelagert. Die Mittellinie dieses Schwenklagers liegt zumindest annähernd parallel zur Fahrzeuglängsachse.

Eine derartige Radträgerlagerung ist in allen Richtungen verspannungsarm aufgebaut. Hierbei sind alle Schwenklager in ihren Hauptbelastungsrichtungen formschlüssig montierbar.

Weitere Einzelheiten der Erfindung ergeben sich aus den Unteransprüchen und der nachfolgenden Beschreibung von schematisch dargestellten Ausführungsformen.
- Figur 1:: Einzelradaufhängung in dimetrischer Darstellung;
- Figur 2:: wie Figur 1, Blickrichtung um 180° gedreht;
- Figur 3:: Draufsicht auf die Einzelradaufhängung;
- Figur 4:: Seitenansicht von Figur 1;
- Figur 5:: Rückansicht von Figur 1;
- Figur 6:: Einzelradaufhängung in dimetrischer Darstellung von schräg vorne;
- Figur 7:: Einzelradaufhängung in Rückansicht mit schräg liegenden Pendelstützen.

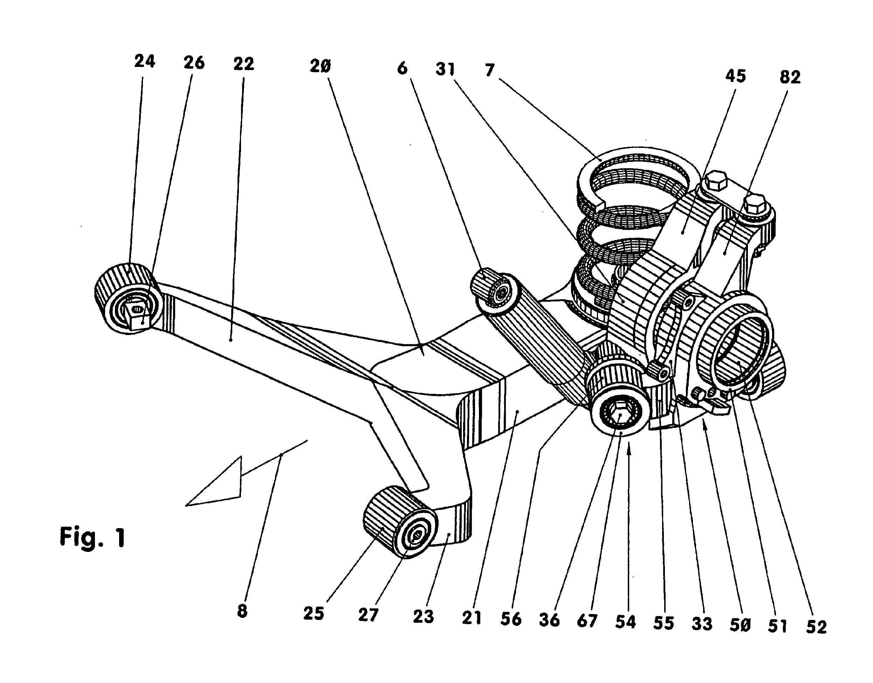

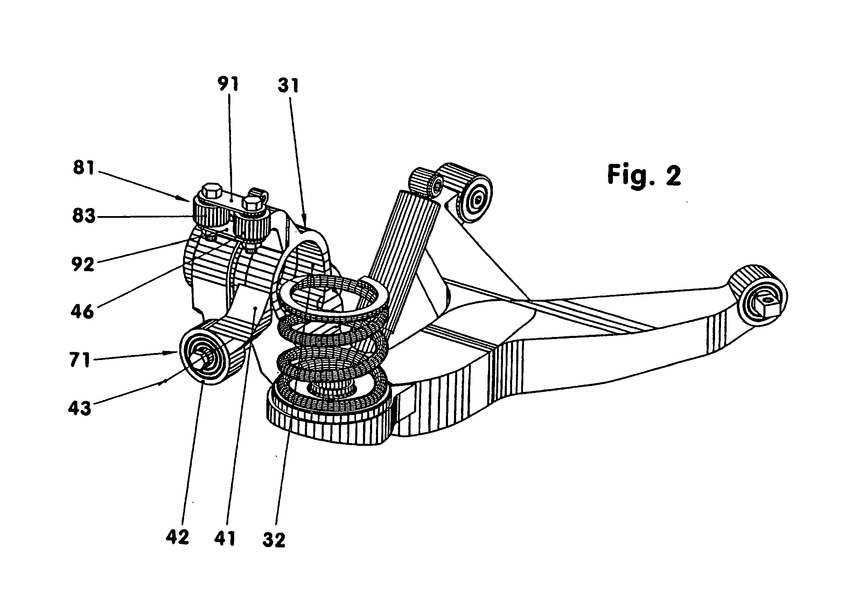

Die in den Figuren 1-7 dargestellte Einzelradaufhängung zeigt beispielhaft einen an einem Schräglenker (20) elastisch gelagerten Radträger (50).

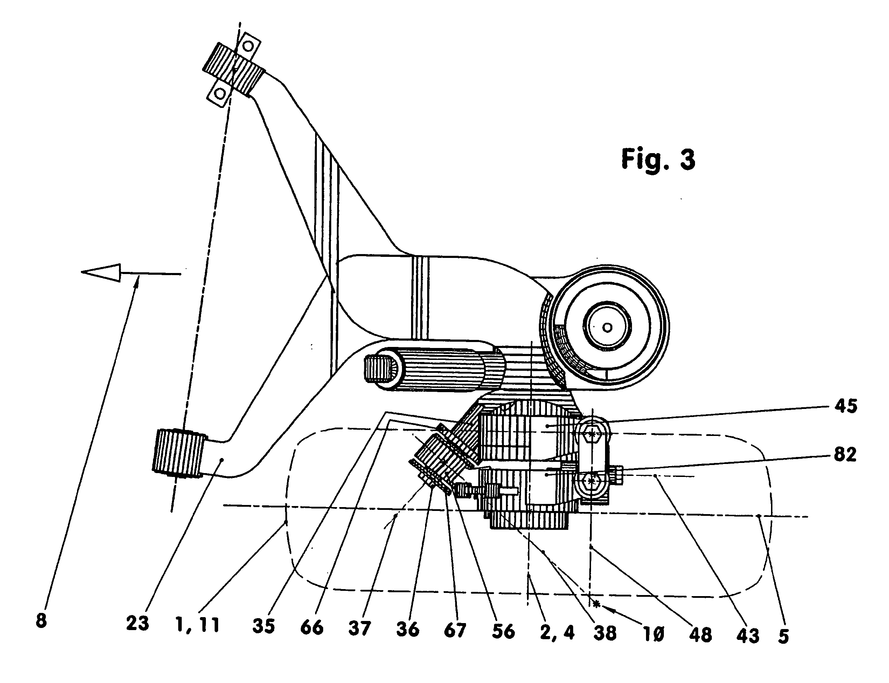

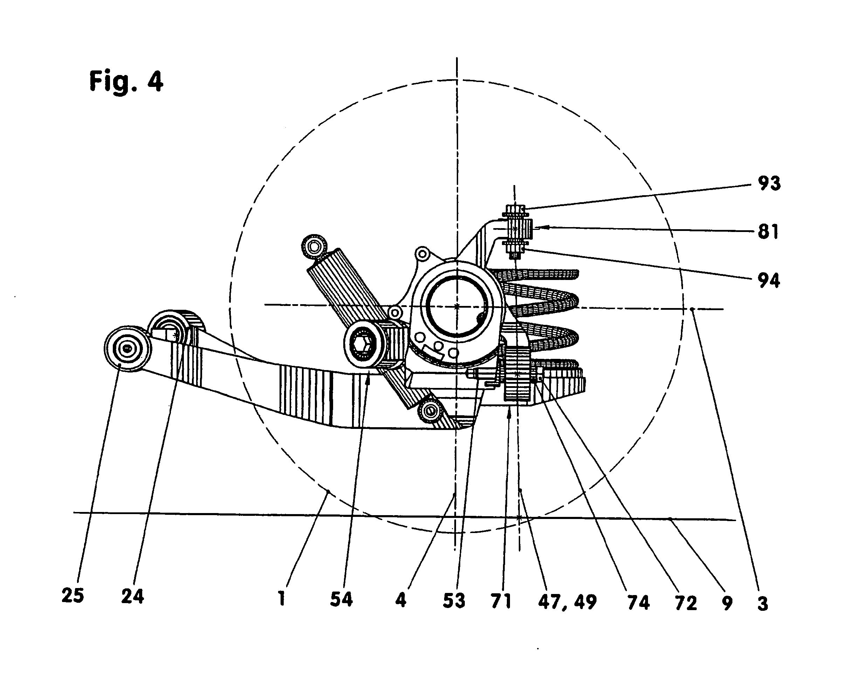

Der Schräglenker (20) umfasst im Ausführungsbeispiel ein längslenkerartiges Mittelteil (21), das sich in Fahrtrichtung (8) in zwei Lenkerarme (22, 23) gabelt. Der Lenkerarm (22) ist hierbei zur Fahrzeugmitte hin orientiert, während der andere (23) im Bereich vor dem Rad (1) endet, vgl. Figur 3. An den beiden freien Enden der Lenkerarme (22, 23) sind jeweils Lenkerbuchsen (24, 25) angeordnet. In der Lenkerbuchse (24) ist ein Bolzen (26) elastisch gelagert, während die Lenkerbuchse (25) eine elastisch gelagerte Hülse (27) aufweist. Die geometrische Mitte der Lenkerbuchse (24) liegt nach Figur 4 höher als die geometrische Mitte der Lagerbuchse (25). Zugleich liegt die Lenkerbuchse (24) gegenüber der Lenkerbuchse (25) näher an der Raddrehachse (2), vgl. Figur 3. Die Elastomerkörper der Schwenklager (24, 25) des Schräglenkers (20) sind z.B. längs- und quersteife Gummilager.

Im Bereich der Raddrehachse (2) ist das Mittelteil (21) zur Fahrzeugaußenseite hin abgewinkelt. An seinem abgewinkelten Ende ist ein Radträgerlagerkörper (31) angeformt. Letzterer hat im Wesentlichen die Form eines kurzen Rohres, dessen Bohrungsmittellinie auf der Raddrehachse (2) liegt oder sich zumindest in deren unmittelbaren Nähe befindet. Das Niveau der oberen Kontur des Mittelteils (21) liegt unterhalb des tiefsten Punktes der zentralen Bohrung (32) des Radträgerlagerkörpers (31).

Der Radträger (50) ist am Radträgerlagerkörper (31) an drei Stellen elastisch gelagert. Diese Stellen sind das Steuerlager (54), das Stützlager (71) und die Pendelstützlagerung (81). Nach Figur 4 liegt das Steuerlager (54) vor der vertikalen (4) und unterhalb der horizontalen Radmittenquerebene (3). Das Stützlager (71) befindet sich hinter der vertikalen Radmittenquerebene (3) und bezüglich des Höhenniveaus beispielsweise unterhalb des Steuerlagers (54). Die Pendelstützlagerung (81) liegt nahezu direkt oberhalb des Stützlagers (71) und oberhalb der horizontalen Radmittenquerebene (3).

Im Bereich des Übergangs vom Mittelteil (21) zum Radträgerlagerkörper (31) befindet sich ein nach vorn abstehender Steuerlagerzapfen (35). Er liegt parallel zur Fahrbahnoberfläche (9) und schließt mit der Fahrtrichtung (8) einen Winkel von 20°-50° ein. In Figur 3 beträgt der Winkel beispielweise 49 Winkelgrade. Die Mittellinie (37) des Steuerlagerzapfens (35) liegt z.B. ca. 8,5% des Raddurchmessers unterhalb der horizontalen Radmittenquerebene (3). Als Raddurchmesser wird hier in den Figuren 3, 4, 5 und 7 gestrichelt skizzierte Reifenaußendurchmesser bezeichnet. Die Mittellinie (37) schneidet die vertikale Radmittenquerebene (4) in einem Abstand von 30% des Raddurchmessers hinter der Radmittenlängsebene (5).

An der Rückseite des Radträgerlagerkörpers (31) ist ein z.B. gekröpfter Stützlagerkragarm (41) angeordnet. Letzterer endet in einem Stützlagerauge (42). Die Mittellinie (43) des Stützlagerauges (42) ist um ca. 8% des Raddurchmessers von der Radmittenlängsebene (5) nach innen versetzt. Sie liegt um ca. 15% des Raddurchmessers unterhalb der Horizontalen Radmittenquerebene (3). Der Mittelpunkt des Stützlagerauges (42) befindet sich beispielsweise um 13,5% des Raddurchmessers nach hinten versetzt hinter der vertikalen Radmittenquerebene (4).

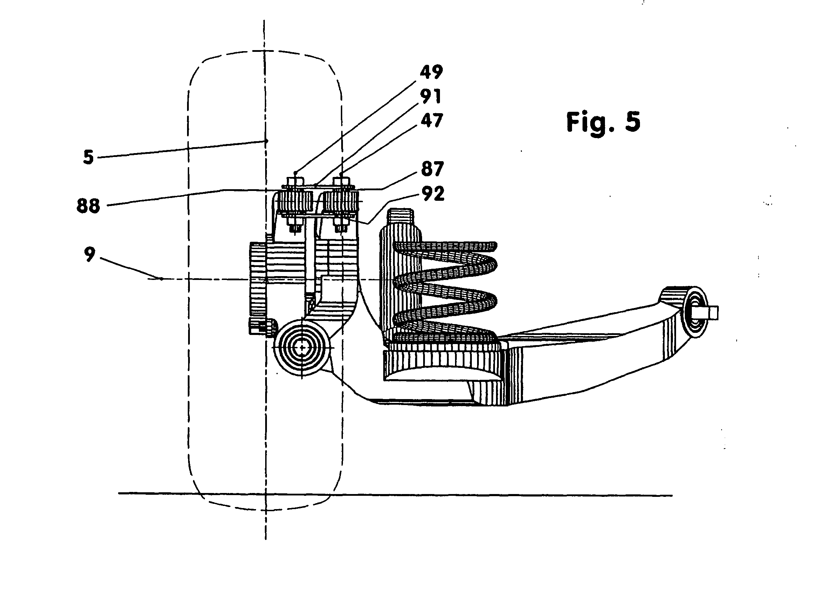

Im oberen Bereich des Radträgerlagerkörpers (31) ist ein z.B. gekröpfter Pendelkragarm (45) angeordnet. Er trägt an seinem freien Ende ein inneres Pendellagerauge (46) mit z.B. einer zur Fahrbahnoberfläche (9) normal orientierten Mittellinie (47). Letztere liegt nach Figur 4 in einer zur vertikalen Radmittenquerebene (4) parallelen Ebene (48), in der auch der Mittelpunkt des Stützlagerauges (42) liegt. Die Mittellinie (47) des inneren Pendellagerauges (46), vgl. Figur 5, ist um ca. 16% des Raddurchmessers von der Radmittellängsebene (5) nach innen versetzt angeordnet. Die Mitte des lenkerseitigen Pendellagerauges (46) befindet sich um z.B. 17% des Raddurchmessers verlagert oberhalb der horizontalen Radmittenquerebene (3).

Das Mittelteil (21) des Lenkers (20) ist nach rückwärts über die vertikale Radmittenquerebene (4) hinaus entgegen der Fahrtrichtung (8) verlängert, vgl. Figuren 3 und 4. In dieser Zone stützt sich am Lenker (20) ein z.B. normal zur Fahrbahnoberfläche (9) orientiertes Federelement (7) ab. Vor der vertikalen Radmittenquerebene (4) und unterhalb der horizontalen Radmittenquerebene (3) ist am Lenker (20) ein Stoßdämpfer (6) gelenkig angelenkt. Der Stoßdämpfer (6), der gegenüber der Radmittenlängsebene (5) um beispielsweise 29% des Raddurchmessers nach innen versetzt ist, ist gegenüber der Vertikalen um ca. 45° nach vorn geneigt.

Der Radträger (50) ist ein im Wesentlichen rohrförmiges Bauteil, das nach außen versetzt am Radträgerlagerkörper (31) elastisch gelagert ist. In der Konstruktionslage liegt er nahezu deckungsgleich vor dem Radträgerlagerkörper (31). Die zentrale Bohrung (52) des Radträgers (50) fluchtet beispielsweise mit der Bohrung (32). Der Abstand zwischen dem zumindest annähernd parallel versetzten Radträger (50) und dem Radträgerlagerkörper (31) beträgt ca. 2% des Raddurchmessers. Der Radträger (50) umfasst eine Nabe (51), einen Steuerlagerkragarm (55) mit einem Steuerlagerauge (56) und einem äußeren Pendelkragarm (82) mit einem Pendellagerauge (83).

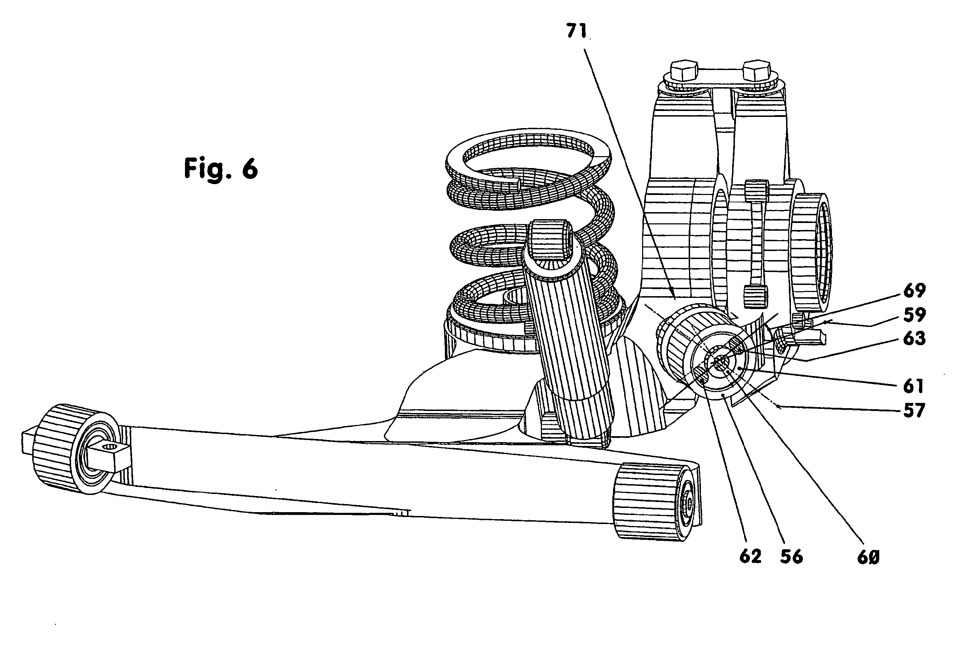

Der z.B. gekröpfte Steuerlagerkragarm (55) ragt in Richtung auf den Steuerlagerzapfen (35) so zu, dass die Mittellinie des Steuerlagerauges (56) mit der Mittellinie (37) des Steuerlagerzapfens (35) fluchtet. Die geometrische Mitte des Steuerlagerauges (56) befindet sich hierbei z.B. um ca. 18% des Raddurchmessers von der vertikalen Radmittenquerebene (4) entfernt. Am Steuerlagerzapfen (35) ist ein vom Steuerlagerauge (56) aufgenommener Elastomerkörper (61) mit z.B. metallischer Innenbuchse (60) angeordnet, vgl. Figur 6. Der Elastomerkörper (61) des Steuerlagers (54) ist in Vertikalrichtung steif ausgelegt. In den Horizontalrichtungen sind die Längs-und Quersteifigkeiten auf ein bestimmtes Eigenlenkverhalten abgestimmt. Somit bewirkt das Steuerlager eine Quer-, Längs-und Vertikalabstützung.

Beidseits des Elastomerkörpers (61) und des Steuerlagerauges (56) sind als mechanische Anschläge Axiallagerscheiben (66, 67) angeordnet, vgl. Figur 3.

Im hinteren, oberen Bereich der Nabe (51) ist der äußere Pendelkragarm (82) angeformt. Er ist nahezu deckungsgleich vor dem inneren Pendelkragarm (45), vgl. Figur 4. Nach dieser Figur decken sich auch die Mittellinie (49) und die geometrische Mitte des radträgerseitigen Pendellagerauges (83) mit der Mittellinie (47) und der Mitte des lenkerseitigen Pendellagerauges (46). In den beiden Pendellageraugen (46, 83) sind z.B. Elastomerkörper (85, 86) mit integrierten Innenbuchsen (87, 88) einvulkanisiert. Die Innenbuchsen (87, 88) stehen nach oben und nach unten wenige Millimeter über die entlang der Mittellinien (47, 49) gemessene Länge der Pendellageraugen (46, 83) über. An den oberen und unteren Stirnseiten der Innenbuchsen (87, 88) liegen die Pendelstützlenker (91) und (92) an, die den Radträger (50) am Schräglenker (20) in Querrichtung abstützen. Die Pendelstützlenker (91, 92) haben jeweils zwei Bohrungen, deren Mittellinien mit den Mittellinien (47, 49) zusammenfallen. Über je eine Schrauben-Mutterverbindung (93, 94) sind nach Figur 5 die linke Innenbuchse (88) mit der rechten Innenbuchse (87) mit den Pendelstützlenkern (91, 92) zu einem steifen Verbund verschraubt. Die Pendellenkerstützen (91, 92) sind hierbei in der Konstruktionslage parallel zur Fahrbahnoberfläche (9) ausgerichtet.

Die Pendelstützlagerung (81) ist in Querrichtung sehr steif ausgelegt, während sie in Längs- und Vertikalrichtung nachgiebig ist.

Nach Figur 5 befindet sich unterhalb des äußeren Pendellagerauges (83) in der Nabe (51) eine parallel zur Fahrbahnoberfläche (9) verlaufende Gewindebohrung (53). In ihr ist ein Elastomerkörper (75) mit Innenbuchse (74) mittels einer Schraube (72) befestigt. Der Elastomerkörper (75), der beispielsweise keine radialen Steifigkeitsunterschiede aufweist, ist Teil des Stützlagerauges (42). Er ist in Quer- und Vertikalrichtung steif, aber in Längsrichtung- bzw. Fahrtrichtung (8) weich ausgelegt.

Anstelle der Schraube (72) kann aus der Nabe (51) ein Gewindezapfen herausragen, auf dem der Elastomerkörper (75 bzw. die Innenbuchse (74) befestigt wird.

Nach Figur 3 liegt beispielsweise der momentane Drehpol (10) der Einzelradaufhängung bei Brems- und Seitenkräften auf der Fahrbahnoberfläche (9) auf der Fahrzeugaußenseite außerhalb des Latsches um ca. 18,5% des Raddurchmessers von der Radmittenlängsebene (5) entfernt. Er liegt nach hinten versetzt von der vertikalen Radmittenquerebene (4) um einen Betrag, der ca. 14% des Raddurchmessers entspricht.

In der Summe ist der Radträger (50) am Lenker (20) so gelagert, dass er hinter der Radmitte bei hoher Vertikal- und Quersteifigkeit fahrkomfortfördernd sehr längsweich ist. Dadurch wird das Steuerlager (54) durch das Stützlager (71) und die Pendelstützlagerung (81) in seiner Wirkung nur wenig beeinflusst.

Beim Bremsen wirkt auf dem Radträger (50), an dem am Bremsträgerflansch (18) der Bremssattel befestigt ist, nach Figur 4 ein Drehmoment entgegen dem Uhrzeigersinn. Das Stützlager (71) läuft entgegen der Fahrtrichtung (8) nach hinten, während sich das äußere Pendellenkerauge (83) gegenüber dem inneren Pendellenkerauge (46) nach vorn bewegt. Hierbei kippt der Radträger (50) unter einer Verstärkung des negativen Sturzes im oberen Bereich gegen den Radträgerlagerkörper (31). Zugleich bewegt sich das Steuerlagerauge (56) in Richtung des Federelements (7), vgl. Figur 3. Dabei bewegt sich das Rad (1) in Vorspur.

Bei einer Kurvenfahrt, bei der das in Figur 3 dargestellte Rad (1) das kurvenäußere ist, bewirken die Seitenkräfte ein untersteuerndes Fahrverhalten. Das Rad (1) schwenkt um den Momentandrehpol (10) in Vorspur. Dies ermöglicht die elastische Führung des Steuerlagerauges (56) entlang der Mittellinie (37) des Steuerlagerzapfens (35). Aufgrund dieser elastischen Nachgiebigkeit und der hohen Quersteifigkeit der Pendelstützlagerung (81) sowie der des Stützlagers (71) schwenkt bewegt sich nur der vordere Bereich des Radträgers (50) auf den Lenker (20) zu. Durch die Schrägstellung der Mittellinie (37) nach Figur 3 wandert der Radträger (50) unter Seitenkrafteinfluss gegenüber dem Radträgerlagerkörper (31) zurück. Folglich schwenkt die Pendelstützlagerung (81) in der Draufsicht so entgegen den Uhrzeigersinn, dass das Pendellagerauge (82) nach hinten bewegt wird. Der Längsversatz ist hier größer als beim Stützlager (71). Die Ebene (48) schwenkt aus der vertikalen Lage nach hinten, wodurch durch den Schnitt der Ebene (48) mit der verlagerten Normalebene (38) eine Gerade entsteht, die einen verlagerten Drehpol (10) auf der Fahrbahnoberfläche (9) darstellt. Der Drehpol (10) ist nach vorn zur Radmitte gewandert. Dieser Bewegung wird das Einfedern des Lenkers (20) überlagert. Die Schwenkbewegung des Lenkers (20), z.B. ein Schräg- oder Längslenker, verschiebt den Drehpol (10) entgegen der Fahrtrichtung (8) nach hinten. Die zuvor beschriebene Vorwärtsbewegung gleicht die Rückwärtsbewegung weitgehend aus.

In der Figur 6 ist u.a. ein Stützlager (71) dargestellt, dessen Schraube (36), vgl. Figur 1, und äußere Axialscheibe (67) entfernt sind. Deutlich zu erkennen ist der auf der Innenbuchse (60) sitzende Elastomerkörper (61) mit den Ausnehmungen (62, 63). Die Ausnehmungen (62, 63) verlaufen beispielsweise parallel zur Mittellinie (57). Sie haben z.B. einen elliptischen Querschnitt und sind gegenüber einer Ausgangsebene (68), die durch die Mittellinie (57) und eine horizontale Normale (60) zu dieser Mittellinie (57) aufgespannt wird, um den Winkel (69) verschwenkt, so dass die vordere Ausnehmung (62) unterhalb und die hintere (63) oberhalb der Ebene liegt. Der Winkel (69) umfasst 30 bis 45 Winkelgrade. Durch die Ausnehmungen (62, 63) ergibt sich im Steuerlager (54) eine zusätzliche Längselastizität, die beim Bremsen das Einschwenken in Vorspur verstärkt.

Ggf. werden die Ausnehmungen (62, 63) so angeordnet, dass die hintere Ausnehmung (63) unter der Ausgangsebene und die vordere (62) darüber liegt. Auch hier kann der Winkelbereich 30 bis 45 Winkelgrade betragen.

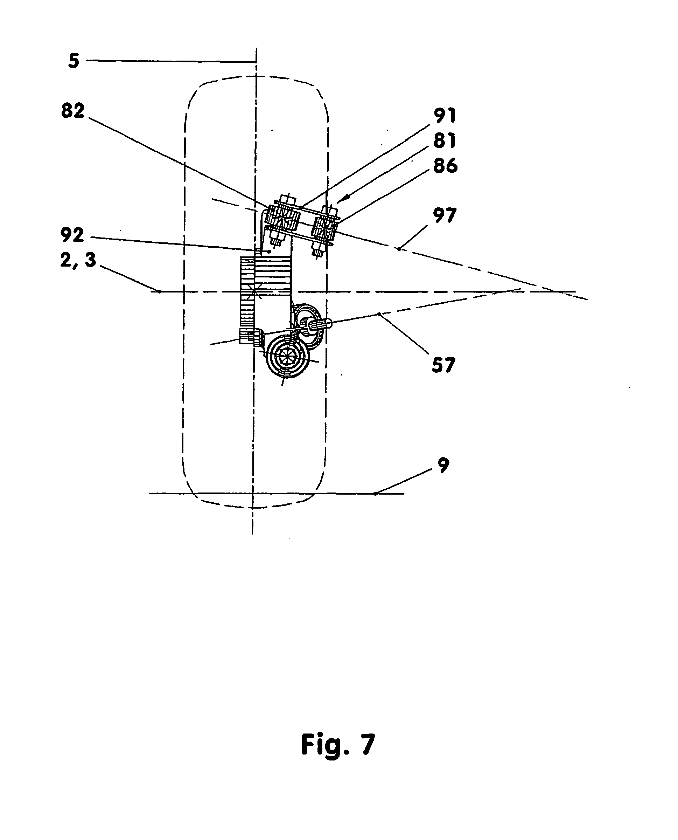

Alternativ zu der in den Figuren 1-5 gezeigten Variante ist in der Figur 7 ein Radträger (50) gezeigt, der mit einem nicht dargestellten Lenker über schräg verlaufende Pendelstützlenker (91, 92) ausgestattet ist. Die geometrischen Mitten der Pendellageraugen (82) bzw. der Elastomerkörper (86) liegen auf einer Wirklinie (97), die mit der horizontalen Radmittenquerebene (3) einen Winkel von z.B. 15 Winkelgraden einschließt. Der Schnittpunkt der Wirklinie (97) liegt zur Fahrzeugmitte hin versetzt. Er hat einen Abstand von 70% des Raddurchmessers gegenüber der Radmittenlängsebene (5).

Des Weiteren ist die Mittellinie (57) des Steuerlagers (54) gegen die horizontale Radmittenquerebene (3) geneigt. Der Neigungswinkel liegt in einem Bereich von 20 ± 10 Winkelgraden. Die Mittellinie (57) schneidet die horizontale Radmittenquerebene (3) zwischen den Rädern einer Achse. Der Abstand zwischen dem Schnittpunkt und der Radmittenlängsebene (5) beträgt ca. 58% des Raddurchmessers.

Ferner ist das Stützlager (71) mit annähernd horizontalen, die vertikale Steifigkeit des Lagers verringernden Ausnehmungen versehen. Beide Ausnehmungen liegen in der Vertikalebene, in der die Mittellinie (43) angeordnet ist. Der Winkel der Richtung der größten radialen Lagersteifigkeit des Stützlagers (71) misst zur horizontalen Radmittenquerebene (3) etwa den halben Wert des Winkels, der zwischen der horizontalen Radmittenquerebene (3) und der Wirklinie (97) der Pendelstützlenker (91, 92) liegt. Die obere Ausnehmung des Stützlagers (71) ist hierbei z.B. geringfügig zur Fahrzeugmitte versetzt, während die untere Ausnehmung des Stützlagers (73) um einen entsprechenden Versatz zur Fahrzeugaußenseite hin verlagert ist.

Durch die beiden Schrägstellungen der Wirklinien (57, 97) wird ein weitgehend bremsneutrales Fahrverhalten erzielt. Beim Bremsen bewegt sich der Radträger (50) unter dem Bremsmoment vorne - entlang der Mittellinie (57) nach außen und hinten aufgrund der Pendelstützlenkerbewegung nach innen. Dieser Nachspureffekt kompensiert das Invorspurgehen unter der Wirkung der Längsverzögerungskräfte. Der Radträger reagiert bremsneutral. Dies verbessert besonders bei aktiven Bremsregelsystemen das Fahrverhalten.

Beim Bremsen mit Hilfe des Motors bleibt das Invorspurgehen vollständig erhalten, da ein Verdrehen des Radträgers (50) um die Raddrehachse (2) durch das Wegfallen des radträgerseitigen Bremsmoments entfällt. Somit wird ein Lastwechselübersteuern erheblich reduziert.

Bei einer zusätzlichen vertikalen Radlast bewegt sich der Radträgerlagerkörper (31) ohne Eigenlenken nach unten, obwohl der Radträger (50) vorn leicht nach innen wandert. Die nach innen abfallende Pendelstützlagerung (81) gleicht auf Fahrbahnhöhe diese Änderung der Radspur aus und erzeugt bzw. vergrößert zusätzlich beim Einfedern einen negativen Sturz.

Folglich bleibt bei dieser Radträgerauslegung bei allen gegen die Fahrtrichtung (8) wirkenden Kräften, also auch beim Bremsen die volle Längsnachgiebigkeit der Radträgerlagerung erhalten. Bremsschwingungen werden somit weitgehend abgekoppelt.

## Patentansprüche

1. Einzelradaufhängung in Schräg-, Längs- oder Verbundlenkerbauweise mit einem radführenden am Fahrzeugaufbau gelagerten Schräg-, Längs- oder Verbundlenker, der einen in mehreren elastischen Schwenklagern gelagerten Radträger aufweist, wobei die elastischen Schwenklager zumindest bereichsweise aus zwei konzentrischen Ringen oder einem Ring und einem Bolzen bestehen, zwischen denen wenigstens bereichsweise ein Elastomerkörper unlösbar integriert ist,
- wobei der Radträger (50) - in Fahrtrichtung (8) gesehen vor der Raddrehachse (2) - über mindestens ein elastisches Steuerlager (54), dessen Lagerzapfen (35) mit seiner Mittellinie (37) in einer Vertikalebene liegt, die mit der Fahrtrichtung (8) einen Winkel von 20° bis 50° einschließt, am Lenker (20) abgestützt ist,
- wobei der Radträger (50) - in Fahrtrichtung (8) gesehen hinter der Raddrehachse (2) - und oberhalb der horizontalen Radmittenquerebene (3) über mindestens einen in Schwenklagern (46, 87) und (83, 88) - mit wenigstens in der Konstruktionslage in einer zumindest annähernd vertikalen Ebene liegenden Mittellinien (47, 49) - angelenkten Pendelstützlenker (91) am Lenker (20) beweglich gelagert ist und
- wobei der Radträger (50) - in Fahrtrichtung (8) gesehen hinter der Raddrehachse (2) - und unterhalb der horizontalen Radmittenquerebene (3) über ein als Schwenklager - mit zumindest annähernd zur Fahrtrichtung (8) paralleler Mittellinie (43) - ausgeführtes Stützlager (71) am Lenker (20) beweglich gelagert ist.

2. Einzelradaufhängung nach Anspruch 1, **dadurch gekennzeichnet, dass** die Mittellinien (47, 49) der Schwenklager der die Pendelstützlenker (91, 92) lagernden Pendelstützlagerung (81) in einer Ebene (48) liegen, die normal zur Mittellinie (43) des Stützlagers (71) orientiert ist.

3. Einzelradaufhängung nach Anspruch 2, **dadurch gekennzeichnet, dass** die Ebene (48) mit der Fahrtrichtung (8) einen Winkel von 90° bis 110° einnimmt.

4. Einzelradaufhängung nach Anspruch 1, **dadurch gekennzeichnet, dass** sich die zur Mittellinie (57) des Steuerlagerzapfens (35) normale - in der geometrischen Mitte des Steuerlagerauges liegende Ebene (38) mit der Ebene (48) in einer Geraden schneidet, die die Fahrbahnoberfläche (9) hinter der Raddrehachse (2) und außerhalb der Radkontur (11) auf der vom Fahrzeug abgewandten Radseite schneidet.

5. Einzelradaufhängung nach Anspruch 1, **dadurch gekennzeichnet, dass** die Pendelstützlagerung (81) aus zwei zwischen zwei Innenbuchsen (87, 88) eingespannten 30 Pendelstützlenkern (91, 92) besteht.

6. Einzelradaufhängung nach Anspruch 1, **dadurch gekennzeichnet, dass** die Pendellageraugen (56, 63) der Pendelstützlagerung (81) jeweils an nach oben ragenden Kragarmen (45, 82) angeordnet sind, wobei die Schwenklagermitten um mindestens ein Fünftel des Raddurchmessers oberhalb der horizontalen Radmittenquerebene (3) liegen.

7. Einzelradaufhängung nach Anspruch 1, **dadurch gekennzeichnet, dass** der Lagerzapfen (35) des Steuerlagers (54) Teil des Lenkers (20) ist.

## Claims

1. Single wheel suspension in the form of an inclined, longitudinal or composite strut construction with a wheel-guiding inclined, longitudinal or composite strut which is mounted on the vehicle body and comprises a wheel carrier mounted in several elastic pivoting bearings, the elastic pivoting bearings consisting at least in regions of two concentric rings or a ring and a bolt, between which an elastomer body is at least in regions non-detachably integrated,
- the wheel carrier (50) being supported on the strut (20) - in front of the wheel rotation axis (2) seen in the direction of travel (8) - via at least one elastic control bearing (54), the bearing journal (35) of which lies with its centre line (37) in a vertical plane which encloses an angle of 20° to 50° with the direction of travel (8),
- the wheel carrier (50) being mounted movably on the strut (20) - behind the wheel rotation axis (2) seen in the direction of travel (8) - and above the horizontal wheel centre transverse plane (3) via at least one swivel support link (91) articulated in pivoting bearings (46, 87) and (83, 88) - with centre lines (47, 49) which lie in an at least approximately vertical plane at least in the construction position, and
- the wheel carrier (50) being mounted movably on the strut (20) - behind the wheel rotation axis (2) seen in the direction of travel (8) - and below the horizontal wheel centre transverse plane (3) via a support bearing (71) in the form of a pivoting bearing
- with a centre line (43) at least approximately parallel to the direction of travel (8).

2. Single wheel suspension according to Claim 1, **characterized in that** the centre lines (47, 49) of the pivoting bearings of the swivel support bearing arrangement (81) supporting the swivel support links (91, 92) lie in a plane (48) which is oriented perpendicularly to the centre line (43) of the support bearing (71).

3. Single wheel suspension according to Claim 2, **characterized in that** the plane (48) encloses an angle of from 90° to 110° with the direction of travel (8).

4. Single wheel suspension according to Claim 1, **characterized in that** the plane (38) normal to the centre line (57) of the control bearing journal (35) and lying in the geometric centre of the control bearing eye intersects the plane (48) in a straight line which intersects the roadway surface (9) behind the wheel rotation axis (2) and outside the wheel contour (11) on the wheel side facing away from the vehicle.

5. Single wheel suspension according to Claim 1, **characterized in that** the swivel support bearing arrangement (81) consists of two swivel support links (91, 92) restrained between two inner bushes (87, 88).

6. Single wheel suspension according to Claim 1, **characterized in that** the swivel bearing eyes (56, 63) of the swivel support bearing arrangement (81) are in each case arranged on upwardly projecting cantilever arms (45, 82), the pivoting bearing centres lying above the horizontal wheel centre transverse plane (3) by at least a fifth of the wheel diameter.

7. Single wheel suspension according to Claim 1, **characterized in that** the bearing journal (35) of the control bearing (54) is part of the strut (20).

## Revendications

1. Suspension indépendante du type à bras oscillant transversal, longitudinal ou mixte avec un bras oscillant transversal, longitudinal ou mixte de guidage de roue logé sur la carrosserie automobile qui comprend un longeron de roue logé dans plusieurs paliers pivotants élastiques, les paliers pivotants élastiques étant constitués au moins par tronçons de deux bagues concentriques ou d'une bague et d'un boulon entre lesquels un corps élastomère est intégré au moins par tronçons de manière indétachable,
- dans laquelle le longeron de roue (50) - vu dans le sens d'avancement (8) devant l'axe de rotation de la roue (2) - s'appuie sur le bras oscillant (20) par l'intermédiaire d'au moins un palier de direction élastique (54) dont le tourillon de palier (35) se trouve dans un plan vertical avec son axe médian (37) qui inclut un angle de 20° à 50° avec la direction d'avancement (8),
- dans laquelle le longeron de roue (50) - vu dans le sens d'avancement (8) derrière l'axe de rotation de la roue (2) - et au-dessus du plan transversal du centre de roue horizontal (3) est logé de manière mobile sur le bras oscillant (20) par l'intermédiaire d'au moins un bras oscillant à biellette d'appui (91) articulé dans des paliers pivotants (46, 87) et (83, 88) - avec des axes médians (47, 49) se trouvant, au moins dans la position de construction, dans un plan au moins à peu près vertical et
- dans laquelle le longeron de roue (50) - vu dans le sens d'avancement (8) derrière l'axe de rotation de la roue (2) - et en dessous du plan transversal du centre de roue horizontal (3) est logé de manière mobile sur le bras oscillant (20) par l'intermédiaire d'un palier d'appui (71) réalisé comme un palier pivotant - avec un axe médian (43) au moins à peu près parallèle au sens d'avancement (8).

2. Suspension indépendante selon la revendication 1, **caractérisée en ce que** les axes médians (47, 49) des paliers pivotants de l'agencement de paliers à biellette d'appui (81) dans lequel sont logés les bras oscillants à biellette d'appui (91, 92) se trouvent dans un plan (48) qui est orienté verticalement par rapport à l'axe médian (43) du palier d'appui (71).

3. Suspension indépendante selon la revendication 2, **caractérisée en ce que** le plan (48) inclut un angle de 90° à 110° avec la direction d'avancement (8).

4. Suspension indépendante selon la revendication 1, **caractérisée en ce que** le plan (38) vertical par rapport à l'axe médian (57) du tourillon de palier de direction (35) - se trouvant au centre géométrique du bossage de palier coupe le plan (48) selon une droite qui coupe la surface de la voie de roulement (9) derrière l'axe de rotation de la roue (2) et à l'extérieur du profil de la roue (11) sur le côté de la roue éloigné du véhicule.

5. Suspension indépendante selon la revendication 1, **caractérisée en ce que** l'agencement de paliers à biellette d'appui (81) est constitué de deux bras oscillants à biellette d'appui (91, 92) tendus entre deux coussinets intérieurs (87, 88).

6. Suspension indépendante selon la revendication 1, **caractérisée en ce que** les bossages de paliers articulés (56, 63) de l'agencement de paliers à biellette d'appui (81) sont disposés chacun sur des bras en porte à faux (45, 82) faisant saillie vers le haut, les centres des paliers pivotants se trouvant à au moins un cinquième du diamètre de la roue au-dessus du plan transversal du centre de roue horizontal (3).

7. Suspension indépendante selon la revendication 1, **caractérisée en ce que** le tourillon de palier (35) du palier de direction (54) fait partie du bras oscillant (20).
